# FASCICULE DE BREVET EUROPEEN

(11) **EP 1 216 850 B1**
(45) Date de publication et mention de la délivrance du brevet: **16.06.2004**
(21) Numéro de dépôt: 01128299.3
(22) Date de dépôt: 29.11.2001
(51) Int. Cl.: B60B 21/10, B60C 17/06

(54) **Ensemble d'une jante et d'un appui de soutien**
Felge und Unterstützungsvorrichtung
Assembly of rim and supporting seat

(30) Priorité: 22.12.2000 FR 0017080
(43) Date de publication de la demande: 26.06.2002
(73) Titulaire: Sociéte de Technologie Michelin, 63000 Clermont-Ferrand Cedex 09 (FR); Michelin Recherche et Technique S.A., 1763 Granges-Paccot (CH)
(72) Inventeur: Abinal, Richard, 63960 Veyre-Monton (FR); Emberger, Thomas, 85110 Kipfenberg (DE); Pompier, Jean-Pierre, Greenville, SC 29607 (US)
(74) Mandataire: Diernaz, Christian

(56) Documents cités:
- EP-A- 0 807 539
- FR-A- 2 713 558
- FR-A- 2 770 459
- FR-A- 2 776 963

## Description

La présente invention concerne un ensemble formé d'une roue ou d'une jante monobloc de montage d'un pneumatique, et d'un anneau de soutien de bande de roulement, ensemble se voulant particulièrement utile dans le cas d'un roulage d'un pneumatique où la pression de gonflage s'abaisse anormalement par rapport à la pression recommandée, ladite pression de service pouvant devenir nulle. Elle concerne aussi la jante de montage en tant que telle, ainsi que l'appui de soutien de bande de roulement en tant que tel.

Les principales difficultés rencontrées dans le cas d'un roulage à plat ou à pression faible concernent les risques de décoincement des bourrelets du pneumatique et en particulier le décoincement du bourrelet du pneumatique situé du côté extérieur par rapport au véhicule. Les techniques proposées et bien connues pour éviter de tels décoincements, et en particulier celle consistant à disposer axialement à l'intérieur du siège extérieur de jante une saillie ou hump de faible hauteur, ne semblent pas donner entière satisfaction et tendent à augmenter les difficultés de montage et de démontage des pneumatiques.

Le brevet EP 0 673 324 décrit, en vue de remédier aux difficultés ci-dessus, un ensemble roulant composé d'un pneumatique et comprenant une jante monobloc avec deux sièges de jante dits inclinés vers l'extérieur et prolongés axialement vers l'extérieur par deux saillies ou humps de faible hauteur. Le siège du bord de jante qui sera situé à l'extérieur du véhicule est prolongé axialement vers l'intérieur par une portée destinée et adaptée à recevoir un appui de soutien de bande de roulement, alors que le siège situé du côté intérieur véhicule est prolongé axialement vers l'intérieur par un rebord de jante, rebord relié à la portée par l'intermédiaire d'une gorge de montage. La variante préférentielle de ladite jante comporte deux sièges inclinés vers l'extérieur et de diamètres inégaux, le siège situé du côté extérieur véhicule ayant un diamètre inférieur au diamètre du siège situé du côté intérieur du véhicule. L'appui de soutien de l'ensemble est un appui en matériau élastomérique déformable de manière élastique, ovalisable, et enfilable sur la portée. Ledit appui de soutien de bande de roulement, comme son nom l'indique a pour effet d'empêcher l'affaissement de la bande de roulement et permettre ainsi au pneumatique de rouler sous une flèche acceptable malgré le manque ou l'absence de gaz de gonflage, tout en maintenant fermement le bourrelet extérieur du pneumatique en position sur son siège de jante.

Bien que représentant un énorme progrès par rapport aux systèmes connus pour des roulages, que nous dénommons roulages en mode dégradé, tout en permettant d'excellentes performances en roulage normal, l'ensemble décrit ci-dessus a un inconvénient majeur, qui est celui d'être lourd.

En vue d'une diminution conséquente de poids, il est possible d'agir efficacement sur les deux éléments de l'ensemble que sont la jante et l'appui de soutien. Les demandes européennes EP 0 807 539 et EP 1098779 correspondantes au préambule de la revendication 1 décrivent de telles jantes allégées qui comportent soit une portée munie de nombreux évidements, soit une portée se résumant à deux zones d'appui circonférentielles séparées axialement par une gorge circonférentielle. Quant à l'appui, il a été allégé de manière significative par le remplacement d'une grande partie du corps plein, entre la base et le sommet dudit appui par de nombreux évidements séparés par des cloisons pleines, de forme et position adaptées. Les demandes européenne EP 1000774 et internationale WO 00/76791 décrivent de tels appuis, utilisés aussi pour bloquer au moins le bourrelet de pneumatique monté sur le siège de jante situé du côté extérieur du véhicule et de plus petit diamètre.

La demande internationale WO 01/08905, en vu d'avoir un ensemble plus léger, propose de diminuer la largeur de l'appui de soutien par rapport à la largeur de la portée d'appui, et décrit les moyens nécessaires au maintien axial dudit appui de soutien de bande de roulement, moyens consistant à doter d'au moins une protubérance la face radialement intérieure de l'appui ; ladite protubérance vient en butée sur la ou les parois de rainure(s) circonférentielle(s) aménagée(s) dans la portée de la jante, cette portée étant destinée précisément à recevoir l'appui de soutien. Munir un objet métallique de rainures, et plus particulièrement une jante de montage de pneumatique, présente plusieurs inconvénients : il n'est pas toujours aisé de créer de telles rainures du fait du procédé de fabrication de ladite jante, et cela est d'autant plus difficile que la ou les rainures sont de faibles dimensions. Par ailleurs, toute rainure signifie la présence de fond de rainure avec congés de raccordement, circulaires ou non, et qui dit congés de raccordement de faible dimension signifie généralement concentration de contraintes et possibilité d'apparition de fissures dans lesdits congés.

Afin d'alléger l'ensemble du type concerné, formé d'une jante comportant une portée d'appui entre un premier et un deuxième siège de jante et d'un appui de soutien de bande de roulement, tout en remédiant aux inconvénients ci-dessus et ainsi permettre une meilleure résistance à la fatigue de la jante de montage, l'invention propose de munir la portée de jante, destinée à recevoir l'appui de soutien, d'une protubérance ou nervure circonférentielle qui se loge dans une rainure de la face radialement intérieure de l'appui de soutien.

Ainsi, l'ensemble conforme à l'invention, formé d'un appui de soutien de bande de roulement, déformable élastiquement, inextensible circonférentiellement, et enfilable sur une portée de jante adaptée, ladite portée prolongeant axialement vers l'intérieur un premier siège de jante, et dont le diamètre minimum est au moins égal au diamètre de toute partie de jante entre l'extrémité axialement extérieure de ladite portée et l'extrémité de la saillie ou hump de faible hauteur, prolongeant axialement à l'extérieur ledit premier siège de jante incliné vers l'extérieur, un deuxième siège de jante ayant, vu en section méridienne, une génératrice dont l'extrémité axialement intérieure est sur un cercle de diamètre supérieur au diamètre du cercle sur lequel se trouve l'extrémité axialement intérieure du premier siège de jante, lesdits deux sièges étant, axialement à l'intérieur, prolongés par des portions tronconiques, de hauteur au moins égale à 0,01 fois le diamètre minimum de la portée et dont les génératrices font avec l'axe de rotation des angles α au moins égaux à 45°, est caractérisé en ce que la portée de jante est pourvue d'au moins une protubérance circonférentielle de hauteur h, disposée dans une rainure circonférentielle de la face radialement intérieure de l'appui de soutien de bande de roulement, de sorte que ladite protubérance prenne axialement appui contre et vienne en butée sur au moins une paroi latérale de la rainure.

Il faut entendre par diamètre minimum de la portée de jante, mesuré dans le plan parallèle au plan équatorial contenant l'extrémité circulaire de ladite portée la plus proche du premier siège de jante, la distance maximale séparant deux points diamétralement opposés de ladite extrémité circulaire.

Il faut entendre par saillie ou hump de faible hauteur, compte tenu des dimensions de jantes concernées et des dimensions de pneumatiques appelés à être montés sur lesdites jantes, une saillie ou hump dont la hauteur est au plus égale à 2,5% du diamètre minimum de la portée de jante.

La protubérance circonférentielle a préférentiellement de faibles dimensions axiale et radiale, lesdites dimensions étant comprises entre 0,005 et 0,02 fois le diamètre de la portée de jante. La protubérance de ladite portée vient alors se loger dans la rainure, sensiblement de mêmes dimensions, de la face intérieure de l'appui et en butée contre les deux parois latérales de la rainure.

La rainure circonférentielle de l'appui de soutien peut être par contre relativement de grandes dimensions. Une protubérance de la portée de jante peut venir alors axialement en contact avec et en butée contre une seule des parois de la rainure circonférentielle.

Pour éviter de trop grandes difficultés de montage de l'appui de soutien de bande de roulement sur la portée de jante, il est dans tous les cas avantageux que la distance axiale séparant l'extrémité, prise sur la génératrice de la portée, de la génératrice de la rainure circonférentielle d'appui la plus proche du deuxième siège de jante, de l'extrémité axiale de l'appui la plus proche du même deuxième siège, soit au plus égale à 0,3 fois la largeur axiale 1 de la face radialement intérieure de l'appui de soutien.

Dans le même but, l'appui de soutien de bande de roulement est renforcé, dans sa partie radialement intérieure, par une armature d'éléments de renforcement divisée en deux parties : une première partie axialement du côté du premier siège de jante, située à une distance radiale de la base de l'appui de soutien au plus égale à la hauteur h de la protubérance, et une deuxième partie du côté du deuxième siège de jante située radialement à une distance de la base de l'appui supérieure à la hauteur h de ladite protubérance.

Toujours dans le même but de faciliter le montage de l'appui de soutien sur la portée de jante, la protubérance de la portée a préférentiellement une section méridienne, dont la face latérale la plus proche du premier siège de jante est de forme tronconique dont la génératrice fait avec l'axe de rotation de l'ensemble un angle β pouvant être compris entre 15 et 45°, alors que la face latérale la plus proche du deuxième siège de jante est de forme tronconique dont la génératrice tronconique fait avec l'axe de rotation un angle χ compris entre 70 et 90°, les deux génératrices pouvant être réunies par un arc circulaire ou un segment de droite. Il est entendu que les bornes peuvent être prises par les angles β et χ.

De manière préférentielle, le diamètre maximum de la protubérance de la portée est au plus égal au diamètre de l'extrémité axialement extérieure du deuxième siège de jante, dans le but de ne pas créer de difficultés de montage du pneumatique destiné à compléter l'ensemble.

L'invention sera mieux comprise à l'aide du dessin annexé à la description comprenant une figure unique 1, représentant schématiquement, vu en section méridienne, un exemple non limitatif d'exécution d'un ensemble d'une jante et d'un appui de soutien pour montage d'un pneumatique.

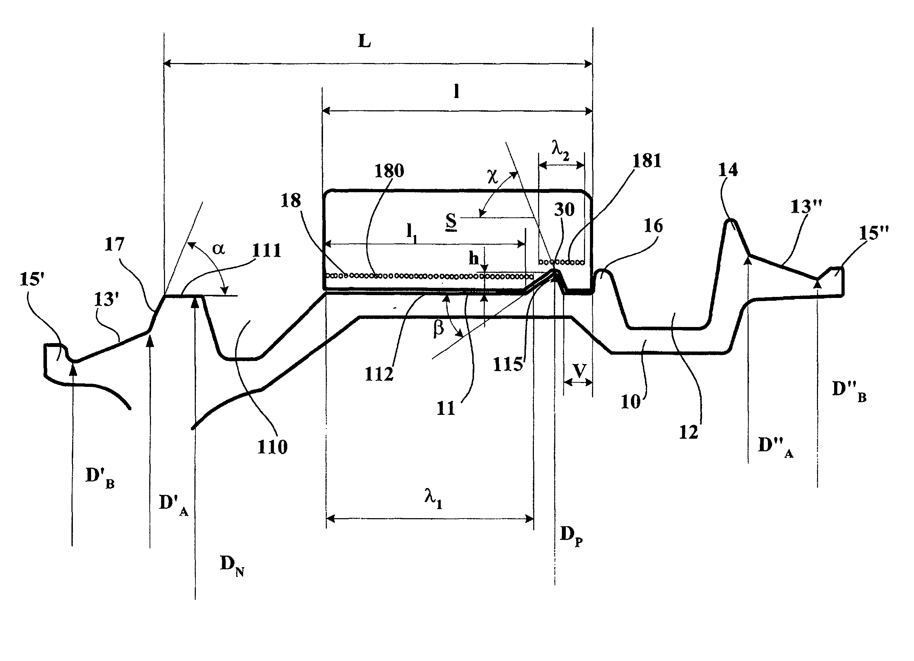

Sur la figure 1 est montrée, vue en section méridienne, une jante monobloc 10, en sachant que la jante peut former avec un disque une roue monobloc ou que le disque peut être fabriqué indépendamment de la jante et réuni à ladite jante par la suite. La jante 10 comprend deux sièges de jante tronconiques 13' et 13" de diamètres inégaux respectivement D'_{A} et D"_{A}. Il faut entendre par diamètre d'un siège de jante tronconique le diamètre de son extrémité circulaire la plus grande. Les génératrices des deux sièges 13' et 13" sont inclinées vers l'extérieur, les diamètres D'_{A} et D"_{A} respectivement de leurs extrémités axialement intérieures étant plus grands que les diamètres D'_{B} et D"_{B} de leurs extrémités axialement extérieures. Lesdits deux sièges tronconiques sont prolongés axialement vers l'extérieur par deux saillies ou humps 15' et 15" dont les hauteurs, mesurées perpendiculairement à l'axe de rotation, sont égales à 5,7 mm. Le premier siège 13', destiné à être monté du côté extérieur du véhicule qui sera équipé de tels ensembles, est axialement à l'intérieur prolongé par une partie tronconique 17 dont la génératrice fait avec une parallèle à l'axe de rotation un angle α ouvert axialement vers l'intérieur et radialement vers l'extérieur de 45° et dont la hauteur, mesurée perpendiculairement à l'axe de rotation, est égale à 4,0 mm. L'extrémité axialement intérieure de ladite génératrice est aussi extrémité de la portée de jante 11, située axialement du côté extérieur du véhicule. Ladite portée, de diamètre D_{N}, est constituée de deux zones d'appui 111 et 112 séparées par une première rainure circonférentielle 110 et la largeur L de la portée est la distance axiale séparant les extrémités axialement les plus éloignées des zones d'appui 111 et 112. La zone d'appui 112, la plus proche axialement du deuxième siège de jante 13" destiné à être monté du côté intérieur du véhicule, a son extrémité la plus proche dudit siège 13" pourvue d'une saillie ou butée de positionnement 16, destinée à éviter le déplacement axial vers l'intérieur de l'appui de soutien S de bande de roulement qui sera disposé sur la portée de jante 11. Le deuxième siège 13" est prolongé axialement vers l'intérieur par un rebord 14, rebord dont la paroi axialement extérieure est semblable à la partie tronconique 17 prolongeant le siège 13'. Ce rebord a une hauteur égale à 4,0 mm, c'est-à-dire égale à la hauteur de la portion tronconique 17 axialement intérieure du premier siège 13'. Ledit rebord 14 délimite, avec la butée de positionnement 16, une gorge de montage 12 pour la mise en place du bourrelet de pneumatique qui sera monté sur le siège 13".

La portée 11 est pourvue, sur la zone d'appui 112, d'une protubérance 115 se présentant, vue en section méridienne, sous forme d'un triangle à sommet arrondi, la face axialement la plus proche du premier siège de jante 13' ayant une génératrice tronconique faisant avec l'axe de rotation un angle β de 40°, ouvert axialement vers l'extérieur et radialement vers l'intérieur, alors que la face axialement la plus proche du deuxième siège de jante 13" a une génératrice faisant avec l'axe de rotation un angle χ de 80°. Lesdites deux génératrices sont réunies par un arc circulaire. Il est évident que ladite protubérance peut avoir une autre forme méridienne, et en particulier une forme demi-circulaire. La protubérance 115 a une hauteur h égale à 4,5 mm, c'est-à-dire sensiblement de même valeur que la hauteur des saillies 15' et 15", et un diamètre D_{P} inférieur au diamètre D"_{B} de l'extrémité axialement extérieure du siège 13". Les caractéristiques précédentes permettent un montage aisé, d'une part de l'appui de soutien sur la portée de jante, et d'autre part d'un pneumatique sur ladite jante. La rainure 30, dont est munie la face radialement inférieure de l'appui de soutien S est de même forme que la protubérance 115 et a sensiblement les mêmes dimensions. La distance axiale V séparant l'extrémité, prise sur la zone d'appui 112, de la génératrice tronconique de la rainure de l'appui la plus proche du deuxième siège de jante de l'extrémité axiale de l'appui la plus proche du même deuxième siège est égale à 0,2 fois la largeur axiale 1 de la face intérieure de l'appui de soutien S.

Ledit appui S est à sa base renforcé par une armature de renforcement 18 d'éléments de renforcement inextensibles, formée de deux parties :
- une première partie 180 axialement la plus proche du premier siège 13', partie qui, lors du montage de l'appui sur la portée de jante, ne franchira pas la protubérance 115 et dont la largeur axiale λ₁ est légèrement supérieure à la distance axiale l₁ séparant l'extrémité de la face intérieure de l'appui la plus proche du premier siège de jante 13' de l'extrémité de la paroi tronconique de la rainure 30 inclinée d'un angle β par rapport à l'axe de rotation ; l'armature 180 de ladite partie étant radialement au-dessus de la face de l'appui et distante de ladite face d'une quantité égale à 2 mm, inférieure à la hauteur h de la rainure 30,
- une deuxième partie 181 axialement la plus proche du deuxième siège de jante 13", partie qui, lors du montage de l'appui sur la portée de jante, franchira la protubérance 115 et dont la largeur axiale λ₂ est légèrement supérieure à la distance axiale V séparant l'extrémité de la face intérieure de l'appui la plus proche du deuxième siège de jante 13" de l'extrémité de la paroi tronconique de la rainure 30 inclinée d'un angle χ axialement la plus éloignée de ce même deuxième siège de jante; l'armature 181 de ladite partie étant radialement au-dessus de la face de l'appui et distante de ladite face d'une quantité égale à 5 mm, supérieure à la hauteur h de la rainure 30.

## Revendications

1. Ensemble formé d'une jante comportant un premier et un deuxième siège de jante et d'un appui de soutien (S) de bande de roulement, déformable élastiquement, inextensible circonférentiellement, et enfilable sur une portée de jante (11) adaptée, ladite portée (11) prolongeant axialement vers l'intérieur le premier siège de jante (13'), portée dont le diamètre minimum (D_{N}) est au moins égal au diamètre de toute partie de jante entre l'extrémité axialement extérieure de ladite portée (11) et l'extrémité de la saillie ou hump (15') de faible hauteur prolongeant axialement à l'extérieur ledit premier siège de jante (13') incliné vers l'extérieur, le deuxième siège de jante (13") ayant, vu en section méridienne, une génératrice dont l'extrémité axialement intérieure est sur un cercle de diamètre (D"_{A}) supérieur au diamètre du cercle sur lequel se trouve l'extrémité axialement intérieure (D'_{A}) du premier siège de jante (13'), lesdits deux sièges étant axialement à l'intérieur prolongés par des portions tronconiques (17, 14), de hauteur au moins égale à 0,01 fois le diamètre minimum de la portée (11) et dont les génératrices font avec l'axe de rotation des angles (α) au moins égaux à 45°, cet ensemble étant **caractérisé en ce que** la portée de jante (11) est pourvue d'au moins une protubérance (115) circonférentielle et de hauteur (h) disposée dans une rainure circonférentielle (30) de la face radialement intérieure de l'appui de soutien (S) de bande de roulement, de sorte que ladite protubérance (115) prenne axialement appui contre et vienne en butée sur au moins une paroi latérale de la rainure (30).

2. Ensemble selon la revendication 1, **caractérisé en ce que** la protubérance circonférentielle a de faibles dimensions axiale et radiale, lesdites dimensions étant comprises entre 0,005 et 0,02 fois le diamètre (D_{N}) de la portée (11) d'appui.

3. Ensemble selon la revendication 1, **caractérisé en ce que** le diamètre maximum (D_{P}) de la protubérance (115) de la portée (11) est au plus égal au diamètre (D"_{B}) de l'extrémité axialement extérieure du deuxième siège de jante (13").

4. Ensemble selon la revendication 1, **caractérisé en ce que** la protubérance (115) de la portée (11) comporte deux faces latérales, la face latérale la plus proche du premier siège de jante (13') est de forme tronconique ayant une génératrice faisant avec l'axe de rotation de l'ensemble un angle (β) pouvant être compris entre 15 et 45°, alors que la face latérale la plus proche du deuxième siège (13") de jante est de forme tronconique ayant une génératrice faisant avec l'axe de rotation un angle (χ) compris entre 70 et 90°, les deux génératrices pouvant être réunies par un arc circulaire ou un segment de droite.

5. Ensemble selon la revendication 1, **caractérisé en ce que** la distance axiale (V) séparant l'extrémité, prise sur la génératrice de la portée (112), de la génératrice de la rainure circonférentielle (30) la plus proche du deuxième siège de jante (13') de l'extrémité axiale de l'appui la plus proche du même deuxième siège est au plus égale à 0,3 fois la largeur axiale 1 de la face radialement intérieure de l'appui de soutien.

6. Ensemble selon la revendication 5, **caractérisé en ce que** l'appui de soutien (S) de bande de roulement est renforcé, dans sa partie radialement intérieure, par une armature (18), d'éléments de renforcement inextensibles, divisée en deux parties : une première partie axialement du côté du premier siège de jante (13') située à une distance radiale de la base de l'appui de soutien (S) au plus égale à la hauteur (h) de la protubérance, et une deuxième partie du côté du deuxième siège de jante (13") située radialement à une distance de la base de l'appui (S) supérieure à la hauteur h de ladite protubérance (115).

## Patentansprüche

1. Baugruppe, die aus einer Felge gebildet ist, die einen ersten und zweiten Felgensitz sowie eine Unterstützungsauflage (S) für eine Lauffläche aufweist, die elastisch verformbar, in Umfangsrichtung undehnbar und auf eine geeignete Felgen-Auflagefläche (11) aufziehbar ist, wobei die Auflagefläche (11) den ersten Felgensitz (13') axial nach innen verlängert, eine Auflagefläche, deren Mindestdurchmesser (D_{N}) mindestens gleich dem Durchmesser des gesamten Teils der Felge zwischen den axial äußeren Ende der Auflagefläche (11) und dem Ende des Vorsprungs oder Humps (15') mit geringer Höhe ist, der den ersten Felgensitz (13'), der nach außen geneigt ist, axial nach außen verlängert, wobei der zweite Felgensitz (13"), im Meridianschnitt gesehen, eine Erzeugende hat, deren axial inneres Ende auf einem Kreis mit einem Durchmesser (D"_{A}) liegt, der größer ist als der Durchmesser des Kreises, auf dem sich das axial innere Ende (D'_{A}) des ersten Felgensitzes (13') befindet, und wobei die beiden Sitze axial nach innen durch kegelstumpfförmige Abschnitte (17, 14) mit einer Höhe verlängert sind, die mindestens gleich ist dem 0,01-fachen des Mindestdurchmessers der Auflagefläche (11), und deren Erzeugende mit der Drehachse Winkel (α) bilden, die mindestens 45° betragen,
**dadurch gekennzeichnet, daß** die Felgen-Auflagefläche (11) mit mindestens einer Umfangsausstülpung (115) mit der Höhe (h) versehen ist, die in einer Umfangsnut (30) der radial inneren Fläche der Unterstützungsauflage (S) für die Lauffläche angeordnet ist, so daß sich die Ausstülpung (115) gegen mindestens eine Seitenwand der Nut (30) axial abstützt und auf dieser zum Anschlag kommt.

2. Baugruppe nach Anspruch 1, **dadurch gekennzeichnet, daß** die Umfangsausstülpung geringe axiale und radiale Abmessungen aufweist, und die Abmessungen zwischen dem 0,005- und dem 0,02-fachen des Durchmessers (D_{N}) der Unterstützungs-Auflagefläche (11) betragen.

3. Baugruppe nach Anspruch 1, **dadurch gekennzeichnet, daß** der maximale Durchmesser (D_{P}) der Ausstülpung (115) der Auflagefläche (11) höchstens gleich dem Durchmesser (D"_{B}) des axial äußeren Endes des zweiten Felgensitzes (13") ist.

4. Baugruppe nach Anspruch 1, **dadurch gekennzeichnet, daß** die Ausstülpung (115) der Auflagefläche (11) zwei seitliche Flächen aufweist, wobei die dem ersten Felgensitz (13') nächstgelegene Seitenfläche kegelstumpfförmig ist und eine Erzeugende hat, die zur Drehachse der Baugruppe einen Winkel (β) bildet, der zwischen 15 und 45° liegen kann, während die dem zweiten Felgensitz (13") nächstgelegene Seitenfläche kegelstumpfförmig ist und eine Erzeugende hat, die zur Drehachse einen Winkel (χ) bildet, der zwischen 70 und 90° liegt, wobei die beiden Erzeugenden durch einen Kreisbogen oder ein Geradensegment vereint werden können.

5. Baugruppe nach Anspruch 1, **dadurch gekennzeichnet, daß** der axiale Abstand (V), der das Ende, auf der Erzeugenden der Auflagefläche (112) gesehen, der Erzeugenden der Umfangsnut (30), die dem zweiten Felgensitz (13') nächstgelegen ist, von dem axialen Ende der Auflage trennt, das dem selben zweiten Sitz nächstgelegen ist, höchstens das 0,3-fache der axialen Breite 1 der radial inneren Fläche der Unterstützungsauflage beträgt.

6. Baugruppe nach Anspruch 5, **dadurch gekennzeichnet, daß** die Unterstützungsauflage (S) für die Lauffläche in ihrem radial inneren Teil durch eine Bewehrung (18) aus undehnbaren Verstärkungselementen verstärkt ist, die in zwei Teile aufgeteilt ist: einen ersten Teil axial auf der Seite des ersten Felgensitzes (13'), einen Teil, der in einem Radialabstand von der Basis der Unterstützungsauflage (S) gelegen ist, der höchstens gleich der Höhe (h) der Ausstülpung ist, und einen zweiten Teil auf der Seite des zweiten Felgensitzes (13"), einen Teil, der in einem Radialabstand von der Basis der Auflage (S) gelegen ist, der größer ist als die Höhe h der Ausstülpung (115).

## Claims

1. An assembly formed of a rim comprising a first and second rim seat and an elastically deformable, circumferentially inextensible tread bearing support (S), which can be slipped on to a suitable rim bearing surface (11), said bearing surface (11) extending the first rim seat (13') axially towards the inside, the minimum diameter (D_{N}) of which bearing surface is at least equal to the diameter of any rim part between the axially outer end of said bearing surface (11) and the end of the protrusion or hump (15') of low height, axially extending to the outside said first rim seat (13') which is inclined towards the outside, the second rim seat (13") having, viewed in meridian section, a generatrix, the axially inner end of which is located on a circle of diameter (D"_{A}) greater than the diameter of the circle on which is located the axially inner end (D'_{A}) of the first rim seat (13'), said two seats being, axially to the inside, extended by frustoconical portions (17, 14), of a height at least equal to 0.01 times the minimum diameter of the bearing surface (11) and the generatrices of which form with the axis of rotation angles (α) at least equal to 45°, this assembly being **characterised in that** the rim bearing surface (11) is provided with at least one circumferential protuberance (115) of height (h), arranged in a circumferential groove (30) of the radially inner face of the tread bearing support (S), such that said protuberance (115) axially comes to bear against and butts up against at least one lateral wall of the groove (30).

2. An assembly according to Claim 1, **characterised in that** the circumferential protuberance is of low axial and radial dimensions, said dimensions being between 0.005 and 0.02 times the diameter (D_{N}) of the support bearing surface (11).

3. An assembly according to Claim 1, **characterised in that** the maximum diameter (D_{P}) of the protuberance (115) of the bearing surface (11) is at most equal to the diameter (D"_{B}) of the axially outer end of the second rim seat (13").

4. An assembly according to Claim 1, **characterised in that** the protuberance (115) of the bearing surface (11) comprises two lateral faces, the lateral face which is closest to the first rim seat (13') is of frustoconical shape having a generatrix which forms with the axis of rotation of the assembly an angle (β) which may be between 15 and 45°, whereas the lateral face closest to the second rim seat (13") is of frustoconical shape having a generatrix which forms with the axis of rotation an angle (χ) of between 70 and 90°, the two generatrices possibly being joined by a circular arc or a straight-line segment.

5. An assembly according to Claim 1, **characterised in that** the axial distance (V) between the end, taken on the generatrix of the bearing surface (112), of the generatrix of the circumferential groove (30) closest to the second rim seat (13') and the axial end of the support closest to the same second seat is at most equal to 0.3 times the axial width I of the radially inner face of the bearing support.

6. An assembly according to Claim 5, **characterised in that** the tread bearing support (S) is reinforced, in its radially inner part, by an armature (18) of inextensible reinforcement elements which is divided into two parts: a first part axially on the side of the first rim seat (13'), located at a radial distance from the base of the bearing support (S) which is at most equal to the height (h) of the protuberance, and a second part on the side of the second rim seat (13") which is located radially at a distance from the base of the support (S) which is greater than the height h of said protuberance (115).
